# FASCICULE DE BREVET EUROPEEN

(11) **EP 3 631 377 B1**
(45) Date de publication et mention de la délivrance du brevet: **21.07.2021**
(21) Numéro de dépôt: 18726478.3
(22) Date de dépôt: 25.05.2018
(51) Int. Cl.: G01F 1/66, G01F 22/02, G01F 13/00, G01F 15/04, G01F 15/06, F17C 13/02, F17C 13/04, G05D 16/06, G01F 15/00

(54) **DETENDEUR POUR BOUTEILLE DE GAZ**
REGLER FÜR EINEN GASZYLINDER
REGULATOR FOR A GAS CYLINDER

(30) Priorité: 30.05.2017 FR 1754761
(43) Date de publication de la demande: 08.04.2020
(73) Titulaire: Sagemcom Energy & Telecom SAS, 92500 Rueil-Malmaison (FR)
(72) Inventeur: SABATIER, Pierre, 92500 Rueil Malmaison (FR); ALEGRE, Thierry, 92500 Rueil Malmaison (FR)
(74) Mandataire: Lavaud, Thomas
(86) Numéro de dépôt international: PCT/EP2018/063788
(87) Numéro de publication internationale: WO 2018/219810

(56) Documents cités:
- WO-A1-00/33036
- WO-A2-2012/164240
- FR-A1- 2 492 523
- FR-A1- 3 016 680
- US-A1- 2016 097 666

## Description

L'invention concerne le domaine des détendeurs pour bouteille de gaz.

### ARRIERE PLAN DE L'INVENTION

Il est intéressant, pour un utilisateur, d'être en mesure de connaître un niveau de gaz restant dans une bouteille de gaz. L'utilisateur peut ainsi estimer la durée de vie restante de la bouteille de gaz et anticiper son remplacement.

Il est aussi intéressant de pouvoir transmettre au fournisseur de la bouteille de gaz le niveau de gaz restant dans la bouteille de gaz, ainsi que d'autres informations relatives au gaz, à la bouteille de gaz et à la consommation de gaz par l'utilisateur. Le fournisseur de la bouteille de gaz peut ainsi gérer ses circuits de distribution de bouteilles de gaz de manière efficace.

Il est cependant relativement complexe de déterminer précisément le niveau de gaz restant. On ne peut se contenter de mesurer la pression régnant à l'intérieur de la bouteille de gaz pour estimer le niveau de gaz restant. En effet, la pression à l'intérieur de la bouteille de gaz ne chute que lorsque la phase liquide du gaz a disparu, c'est à dire lorsque la bouteille de gaz est déjà pratiquement vide.

Il a été envisagé d'utiliser différentes méthodes pour mesurer le niveau de gaz restant : système optique, thermomètre à cristaux liquides collé sur la bouteille de gaz, mesure de la masse de la bouteille de gaz, etc.

Cependant, ces méthodes sont coûteuses et complexes à concevoir et à intégrer.

US 2016/097666 décrit un détendeur pour bouteille de gaz selon le préambule de la revendication 1.

### OBJET DE L'INVENTION

L'invention a pour objet d'estimer précisément un niveau de gaz restant dans une bouteille de gaz et de transmettre cette information, de manière simple et peu coûteuse.

### RESUME DE L'INVENTION

En vue de la réalisation de ce but, on propose un détendeur pour bouteille de gaz comportant un corps à l'intérieur duquel sont définis un conduit d'entrée de gaz destiné à être raccordé à la bouteille de gaz, une chambre de pression dans laquelle débouche le conduit d'entrée de gaz, des moyens d'ajustement d'une pression à l'intérieur de la chambre de pression, et un conduit de sortie de gaz qui s'étend depuis la chambre de pression. Selon l'invention, le corps du détendeur comporte un débitmètre électronique agencé pour mesurer un débit du gaz circulant dans le conduit de sortie de gaz, des composants électriques de mesure agencés pour acquérir et stocker des mesures de débit du gaz, et des composants électriques de communication sans fil agencés pour transmettre des données relatives aux mesures de débit du gaz.

Le débitmètre électronique permet d'estimer un niveau de gaz restant dans la bouteille de gaz, et les composants électriques de communication sans fil permettent de transmettre le niveau de gaz restant ainsi, éventuellement, que d'autres données relatives par exemple à la bouteille de gaz, au type de gaz, à la consommation de gaz, etc.

Le débitmètre électronique mesure le débit du gaz qui circule dans le conduit de sortie de gaz. La plupart des détendeurs comportent un tel conduit de sortie de gaz. On utilise ainsi des caractéristiques préexistantes des détendeurs, ce qui permet de réutiliser des designs existants, de faciliter l'intégration du débitmètre électronique, et de simplifier et de réduire le coût de conception du détendeur selon l'invention.

On propose de plus un procédé de surveillance d'une bouteille de gaz sur laquelle est raccordé un détendeur tel que celui qui vient d'être décrit. Le procédé de surveillance comporte les étapes :
- de détecter une montée de pression dans la chambre de pression du détendeur ;
- de compter le débit du gaz fourni par la bouteille de gaz ;
- de décompter un niveau de gaz restant dans la bouteille de gaz ;
- de comparer le niveau de gaz restant avec un niveau minimum prédéterminé ;
- si le niveau de gaz restant atteint le niveau minimum prédéterminé, d'envoyer un message d'alerte ;
- sinon, de continuer à compter le débit du gaz.

On propose aussi un programme d'ordinateur comprenant des instructions pour mettre en œuvre, par un composant de traitement tel qu'un microcontrôleur pouvant être intégré dans un détendeur, le procédé de surveillance qui vient d'être décrit.

On propose de plus des moyens de stockage qui stockent un programme d'ordinateur comprenant des instructions pour mettre en œuvre, par un composant de traitement tel qu'un microcontrôleur pouvant être intégré dans un détendeur, le procédé de surveillance qui vient d'être décrit.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 représente une vue en coupe et de côté d'un détendeur selon l'invention ;
- la figure 2 représente une vue de dessus du détendeur selon l'invention ;
- la figure 3 représente une vue de dessous du détendeur selon l'invention ;
- la figure 4 représente une architecture électrique du détendeur selon l'invention ;
- la figure 5 représente un procédé de surveillance d'une bouteille de gaz selon l'invention.

### DESCRIPTION DETAILLEE DE L'INVENTION

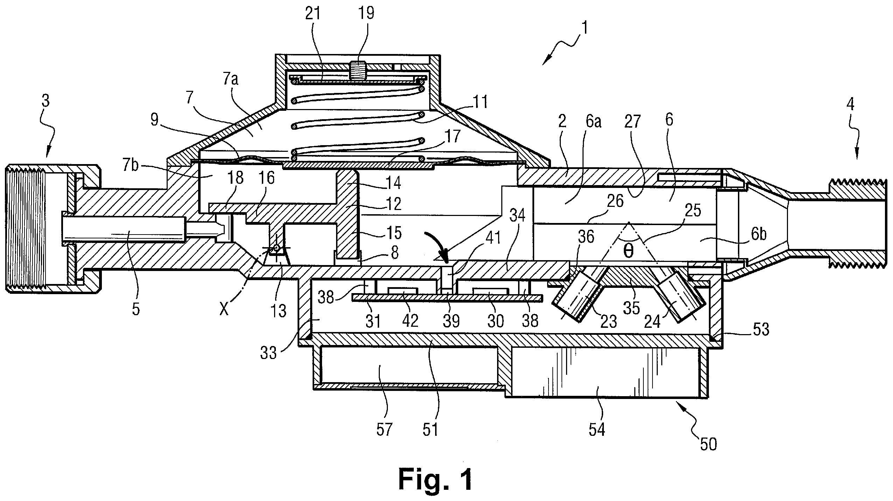

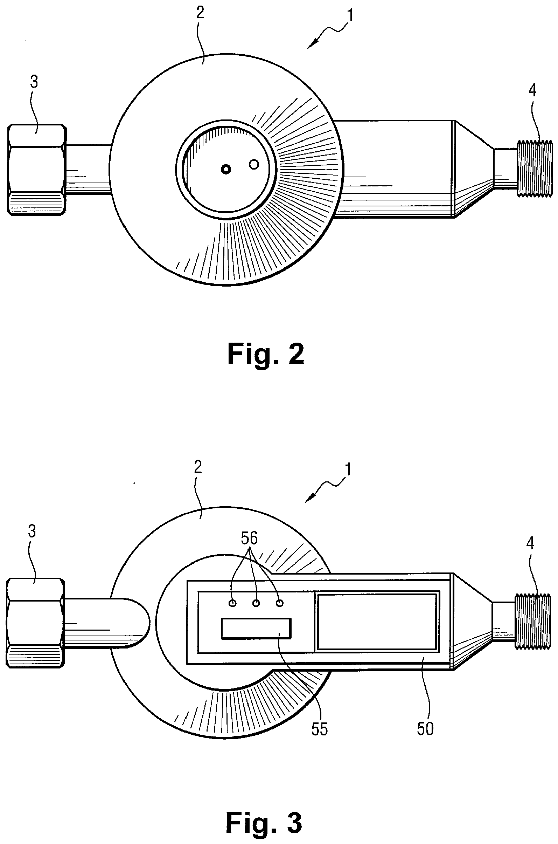

En référence aux figures 1 à 4, le détendeur pour bouteille de gaz selon l'invention 1 comporte un corps 2. Le corps 2 est ici fabriqué en laiton mais pourrait être fabriqué en un matériau différent.

Le corps 2 comporte tout d'abord un port d'entrée 3 et un port de sortie 4. Le port d'entrée 3 est destiné à être raccordé à une bouteille de gaz. Le port de sortie 4 est destiné à être raccordé à une installation située au domicile d'un utilisateur, la bouteille de gaz alimentant ainsi en gaz l'installation.

La bouteille de gaz est ici une bouteille de gaz de type « 13kg ». Le port d'entrée 3 comprend ici un écrou prisonnier, taraudé à 21,8mm, présentant un pas à gauche de 1,814mm. Le port de sortie 4 comprend un filetage mâle M20x1,5. Bien sûr, la bouteille de gaz, le port d'entrée 3 et le port de sortie 4 pourraient être différents. Le port d'entrée 3 et le port de sortie 4 peuvent varier notamment en fonction de la bouteille de gaz à raccorder, du pays dans lequel la bouteille de gaz est utilisée, de normes à respecter dans ledit pays, etc.

Un conduit d'entrée de gaz 5, un conduit de sortie de gaz 6 et une chambre de pression 7, située entre le conduit d'entrée de gaz 5 et le conduit de sortie de gaz 6, sont définis à l'intérieur du corps 2. Le conduit d'entrée de gaz 5 s'étend depuis le port d'entrée 3 et débouche dans la chambre de pression 7. Le conduit de sortie de gaz 6 s'étend depuis la chambre de pression 7 jusqu'au port de sortie 4.

La chambre de pression 7 comprend des moyens d'ajustement d'une pression à l'intérieur de la chambre de pression 7, ainsi qu'un capteur optique, en l'occurrence une fourche optique 8.

Les moyens d'ajustement comprennent une membrane déformable 9, un ressort 11 de raideur réglable et un organe d'admission 12.

La membrane déformable 9 divise la chambre de pression 7 en une chambre supérieure 7a et en une chambre inférieure 7b. Le ressort 11 s'étend dans la chambre supérieure 7a et présente une extrémité fixée à une plaque rigide 17 située au centre de la membrane déformable 9. La pression régnant dans la chambre supérieure 7a est égale à la pression atmosphérique.

L'organe d'admission 12 est positionné dans la chambre inférieure 7b. L'organe d'admission 12 est monté pivotant autour d'un axe X sur un support 13 formé dans un fond de la chambre inférieure 7b de la chambre de pression 7. L'organe d'admission 12 comporte un premier bras 14, un deuxième bras 15 et un troisième bras 16. Le premier bras 14 est en contact avec la plaque rigide 17. Le deuxième bras 15, situé dans le prolongement du premier bras 14, coopère avec la fourche optique 8. Le troisième bras 16, quant à lui, s'achève par un clapet d'admission 18. Le clapet d'admission 18 est mobile entre deux positions angulaires extrêmes : une position de fermeture, dans laquelle il ferme le conduit d'entrée de gaz 5, et une position d'ouverture maximale, dans laquelle il ouvre le conduit d'entrée de gaz 5 avec un angle d'ouverture maximal.

L'ajustement de la pression à l'intérieur de la chambre de pression 7 fonctionne de la manière suivante.

Lorsque le détendeur 1 n'est pas raccordé à une bouteille de gaz, ou qu'il est raccordé à une bouteille de gaz complètement vide, la pression relative à l'intérieur de la chambre inférieure 7b est égale à la pression atmosphérique, et donc la pression absolue à l'intérieur de la chambre inférieure 7b est nulle. Le ressort 11 repousse alors la membrane déformable 9 qui repousse à son tour le premier bras 14 de l'organe d'admission 12. L'organe d'admission 12 pivote et entraîne le clapet d'admission 18 qui pivote vers la position d'ouverture maximale. Lorsque l'organe d'admission 18 se trouve dans la position d'ouverture maximale, une extrémité libre du deuxième bras 15 est détectée par la fourche optique 8.

La fourche optique 8 joue donc le rôle d'un détecteur de pression absolue nulle.

Lorsque le détendeur 1 est raccordé à une bouteille de gaz qui n'est pas complètement vide, la pression du gaz fourni par la bouteille de gaz tend à augmenter la pression à l'intérieur de la chambre inférieure 7b. La pression à l'intérieur de la chambre inférieure 7b repousse la membrane 9 et comprime le ressort 11. L'organe d'admission 12 fait pivoter le clapet d'admission 18 vers la position de fermeture. Lorsque la différence entre la pression à l'intérieur de la chambre inférieure 7b et la pression atmosphérique atteint un seuil de pression prédéfini, le clapet d'admission 18 atteint la position de fermeture. Le gaz ne pénètre plus dans la chambre inférieure 7b.

On assure ainsi que la différence entre la pression du gaz fourni par la bouteille de gaz à l'installation et la pression atmosphérique ne dépasse pas le seuil de pression prédéfini. Le seuil de pression prédéfini dépend notamment du type de gaz et des réglementations en vigueur dans les pays d'utilisation. Le seuil de pression prédéfini est classiquement compris entre 28mbar et 38mbar.

Le détendeur 1 comporte de plus une vis de réglage 19 accessible au niveau d'une surface supérieure du détendeur 1. La vis de réglage 19 permet d'ajuster, par exemple en usine, la position d'une plaque de réglage 21 qui comprime le ressort 11 contre la membrane 9. L'ajustement de la position de la plaque de réglage 21 permet ainsi de régler le seuil de pression prédéfini.

Le détendeur 1 comporte de plus un débitmètre électronique agencé pour mesurer un débit du gaz circulant dans le conduit de sortie de gaz 6.

Par « débitmètre électronique », on entend un débitmètre qui produit des mesures sous forme de signaux électriques de mesure et qui coopère avec des composants électriques de mesure qui acquièrent et traitent les signaux électriques de mesure. Le débitmètre électronique est ici un débitmètre à ultrasons.

Le débitmètre à ultrasons comporte un premier transducteur ultrasonore 23 et un deuxième transducteur ultrasonore 24. Le premier transducteur ultrasonore 23 et le deuxième transducteur ultrasonore 24 sont appairés et sont chacun reliés à des composants électriques de mesure.

Le premier transducteur ultrasonore 23 et le deuxième transducteur ultrasonore 24 sont ici des transducteurs piézoélectriques.

La mesure du débit du gaz consiste à mesurer une vitesse moyenne du gaz dans le conduit de sortie de gaz 6.

Pour mesurer la vitesse moyenne du gaz, le premier transducteur ultrasonore 23 émet tout d'abord dans le conduit de sortie de gaz 6 un signal ultrasonore de mesure qui parcourt d'amont en aval un trajet 25 de longueur définie. Par « d'amont en aval », on entend ici « depuis l'entrée du conduit de sortie de gaz 6 vers la sortie du conduit de sortie de gaz 6 ». Le deuxième transducteur ultrasonore 24 reçoit le signal ultrasonore de mesure. Le temps de trajet d'amont en aval mis par le signal ultrasonore de mesure pour parcourir le trajet 25 d'amont en aval est mesuré.

Le deuxième transducteur ultrasonore 24 émet ensuite dans le conduit de sortie de gaz 6 un signal ultrasonore de mesure qui parcourt d'aval en amont le trajet 25. Le premier transducteur ultrasonore 23 reçoit le signal ultrasonore de mesure. Le temps de trajet d'aval en amont mis par le signal ultrasonore de mesure pour parcourir le trajet 25 d'aval en amont est mesuré.

Des plaquettes (non représentées sur les figures) sont agencées en entrée du conduit de sortie de gaz 6. Les plaquettes permettent d'assurer que l'écoulement du gaz dans le conduit de sortie de gaz 6 est un écoulement laminaire et non turbulent. Le nombre de Reynolds est ainsi inférieur à 2000. On améliore grâce à ces plaquettes la précision de la mesure du débit du gaz.

On note que le conduit de sortie de gaz 6 est divisé par une cloison horizontale 26 en un conduit supérieur 6a et en un conduit inférieur 6b. Les signaux ultrasonores de mesure sont ainsi réfléchis par la cloison horizontale 26 au lieu d'être réfléchis par la paroi supérieure 27 du conduit de sortie de gaz 6. On réduit ainsi l'angle θ de réflexion du signal ultrasonore de mesure au cours du trajet 25, on augmente le cos θ, et on améliore ainsi la précision de la mesure du débit du gaz.

Le temps de trajet d'amont en aval et d'aval en amont sont acquis puis traités par les composants électriques de mesure 30.

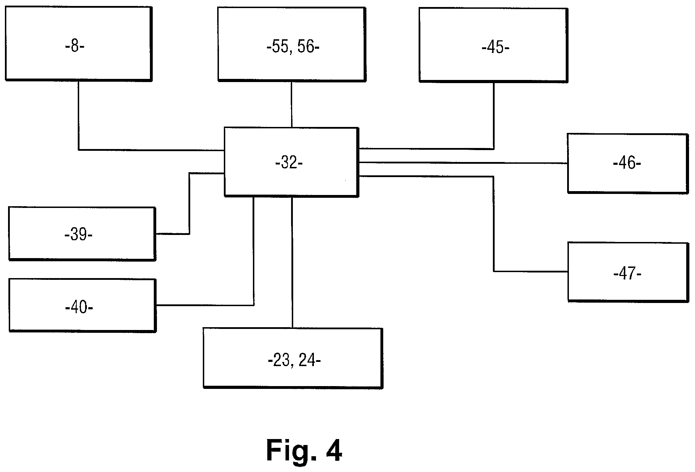

Les composants électriques de mesure 30 sont montés sur une carte électrique 31. Les composants électriques de mesure 30 comportent des composants d'acquisition comprenant un convertisseur analogique numérique, qui acquièrent les temps de trajet d'amont en aval et les temps de trajet d'aval en amont. Les composants électriques de mesure comportent aussi un composant de traitement « intelligent » qui est ici un microcontrôleur 32 (visible uniquement sur la figure 4), mais qui pourrait être un composant différent, par exemple un processeur ou un FPGA.

Le microcontrôleur 32 remplit de nombreuses fonctions. Le microcontrôleur 32 commande l'ensemble des composants de la carte électrique 31. Il pilote en particulier le premier transducteur ultrasonore 23 et le deuxième transducteur ultrasonore 24. Le microcontrôleur 32 calcule la vitesse moyenne du gaz à partir de la différence entre le temps de trajet d'aval en amont et le temps de trajet d'amont en aval. Le microcontrôleur 32 déduit de la vitesse moyenne du gaz et d'une section du conduit de sortie de gaz 6 le débit du gaz circulant dans le conduit de sortie de gaz 6. Le microcontrôleur 32 effectue divers traitements sur les mesures de débit du gaz. Il évalue en particulier la consommation de gaz, le niveau de gaz restant, et il calcule l'énergie consommée, qui dépend du pouvoir calorifique du gaz contenue dans la bouteille de gaz.

Les composants électriques de mesure 30 comportent aussi une mémoire dans laquelle sont stockées les mesures de débit du gaz, ainsi que diverses autres données relatives au débit du gaz.

Le premier transducteur ultrasonore 23, le deuxième transducteur ultrasonore 24 et la carte électrique 31 sont situés dans une chambre de mesure 33 définie dans le corps 2 du détendeur 1.

La chambre de mesure 33 est située sous la chambre de pression 7 et sous le conduit de sortie de gaz 6.

On voit que la chambre de pression 7, le conduit de sortie de gaz 6 et la chambre de mesure 33 sont définis par des cloisons à l'intérieure du corps 2. Parmi ces cloisons, une cloison commune 34 est commune au moins partiellement à la chambre de pression 7, au conduit de sortie de gaz 6 et à la chambre de mesure 33.

Le premier transducteur ultrasonore 23 et le deuxième transducteur ultrasonore 24 sont montés sur un support 35 est intégré dans la cloison commune 34 pour fermer la cavité formée par la chambre de pression 7 et le conduit de sortie de gaz 6. Un joint d'étanchéité 36 s'étend à l'interface entre la cloison commune 34 et le support 35.

La carte électrique 31, quant à elle, s'étend parallèlement à la cloison commune 34, et est fixée à des plots de fixation 38 eux-mêmes montés sur la cloison commune 34.

Le détendeur 1 comporte de plus un capteur de pression absolue 39. Le capteur de pression absolue 39 mesure la pression absolue à l'intérieur de la chambre de pression 7, dans la chambre inférieure 7b. Le capteur de pression absolue 39 est monté sur la carte électrique 31, qui est située dans la chambre de mesure 33. Pour amener la pression de la chambre inférieure 7b au niveau du capteur de pression absolue 39 et donc de la chambre de mesure 33, un conduit de mesure 41 est pratiqué dans la cloison commune 34. Le conduit de mesure 41 débouche à une extrémité dans la chambre inférieure 7b de la chambre de pression 7, et à une autre extrémité dans la chambre de mesure 33 au regard du capteur de pression absolue 39 lorsque la carte électrique 31 est fixée à la cloison commune 34.

Le détendeur 1 comporte de plus un capteur de température 40 (visible uniquement sur la figure 4). Le capteur de température 40 est lui aussi monté sur la carte électrique 31. Le capteur de température 40 mesure une température assimilable à celle du gaz dans la chambre de pression 7.

On note que la fourche optique 8, le capteur de pression absolue 39 et le capteur de température 40 sont connectés aux composants électriques de mesure 30 et, en particulier, au microcontrôleur 32. Les composants électriques de mesure 30 acquièrent donc aussi les signaux produits par la fourche optique 8 (détection de pression absolue nulle), par le capteur de pression absolue 39 et par le capteur de température 40.

L'information de pression absolue, couplée à l'information de température et au débit du gaz mesuré, permet de calculer à tout instant la masse de gaz restant dans la bouteille de gaz. Le microcontrôleur 32 peut ainsi évalue de manière fine et précise la consommation de gaz en faisant des compensations en température et en pression et donc le niveau de gaz restant dans la bouteille de gaz.

Le détendeur 1 comporte de plus des composants électriques de communication sans fil 42, qui sont eux aussi montés sur la carte électrique 31.

Les composants électriques de communication sans fil 42 comportent le microcontrôleur 32, qui pilote l'ensemble des composants électriques de communication sans fil 42. Les composants électriques de communication sans fil 42 comprennent aussi des composants constituant une interface RFID 45 (pour *Radio Frequency Identification*), une interface BLE 46 (pour *Bluetooth Low Energy*) et une interface LoRa 47 (pour Long Range).

L'interface RFID 45 est utilisée pour des fonctions de logistique et d'installation.

L'interface RFID 45 peut permettre au détendeur d'acquérir des informations.

Par exemple, si la bouteille de gaz comporte une étiquette RFID qui contient des informations relatives au type de bouteille de gaz ou au type de gaz, l'interface RFID 45 peut acquérir directement ces informations. On note que la bouteille de gaz pourrait aussi comporter un code barre ou un code QR, et le détendeur 1 un lecteur de code barre ou de code QR.

Le détendeur 1 et la bouteille de gaz sont ainsi appairés. L'information du type de gaz peut permettre de déterminer le coefficient de compressibilité du gaz Z, utilisé dans la loi des gaz réels PV=nZRT. L'évaluation de la consommation de gaz est ainsi réalisée de manière encore plus précise.

De même, l'utilisateur ou un opérateur travaillant par exemple pour le fournisseur de la bouteille de gaz, peut transmettre des informations au détendeur 1 via l'interface RFID 45, ces informations comprenant par exemple le type de bouteille de gaz ou le type de gaz.

L'utilisateur ou l'opérateur peut ainsi communiquer avec le détendeur 1 grâce à un dispositif émetteur-récepteur externe. L'utilisateur ou l'opérateur peut ainsi prendre connaissance d'informations stockées dans la mémoire des composants électriques de mesure 30.

L'interface BLE 46 permet quant à elle de communiquer avec un réseau BLE de l'habitation de l'utilisateur ou de tout type de lieu dans lequel pourrait se trouver la bouteille de gaz.

L'interface LoRa 47 comporte un émetteur-récepteur à très bas débit et très basse consommation électrique. L'interface LoRa 47 utilise un protocole dédié aux objets connectés et permet d'établir des communications de longue portée. L'interface LoRa 47 permet de communiquer directement avec le fournisseur de la bouteille de gaz pour lui envoyer des informations diverses relatives à l'état de la bouteille de gaz, ou bien de transmettre une alerte lorsque la bouteille de gaz est presque vide.

Le détendeur 1 comporte en outre un boîtier électronique 50 positionné au niveau d'une surface inférieure du corps 2 du détendeur 1.

Le boîtier électronique 50 est fixé au corps 2 du détendeur 1.

Le boîtier électronique 50 comporte un capot 51 fabriqué en un matériau transparent pour les ondes radioélectriques. Le capot 51 est ici fabriqué en un matériau thermoplastique chargé de fibre de verre.

Le boîtier électronique 50 est positionné sur le corps 2 du détendeur 1 de sorte que le capot 51 constitue une cloison qui ferme la chambre de mesure 33. Un joint d'étanchéité 53 s'étend à l'interface entre le capot 51 et les cloisons latérales de la chambre de mesure 33.

On note ici que la chambre de mesure 33 est remplie, au moment de l'assemblage du détendeur 1, d'un gaz neutre, dépourvu d'oxygène. Le gaz neutre permet de vérifier visuellement l'étanchéité de la chambre de mesure 33.

Le boîtier électronique 50 comporte un premier compartiment 54 dans lequel est positionné un composant de stockage d'énergie électrique destiné à alimenter le boîtier électronique 50, les composants électriques de mesure 30 et les composants électriques de communication sans fil 42. Le composant de stockage d'énergie électrique est ici une batterie.

Le boîtier électronique 50 comporte de plus des composants d'interface comprenant un écran à cristaux liquides 55 et des boutons poussoirs 56. L'écran 55 et les boutons poussoirs 56 permettent d'afficher des informations relatives à la bouteille de gaz, au gaz, au débit du gaz mesuré, à la consommation de gaz et au niveau de gaz restant. L'écran 55 et les boutons poussoir 56 permettent aussi de transmettre au microcontrôleur 32 diverses informations relatives à la bouteille de gaz et au gaz lui-même.

Le boîtier électronique 50 comporte en outre un deuxième compartiment 57 dans lequel sont situés divers composants électriques qui assurent le fonctionnement de l'écran 55, interagissent avec les boutons poussoirs 56, et permettent au boîtier électronique 50 de communiquer avec la carte électrique 31. Les antennes de l'interface RFID 45, de l'interface BLE 46 et de l'interface LoRa 47 sont situées dans le deuxième compartiment 57.

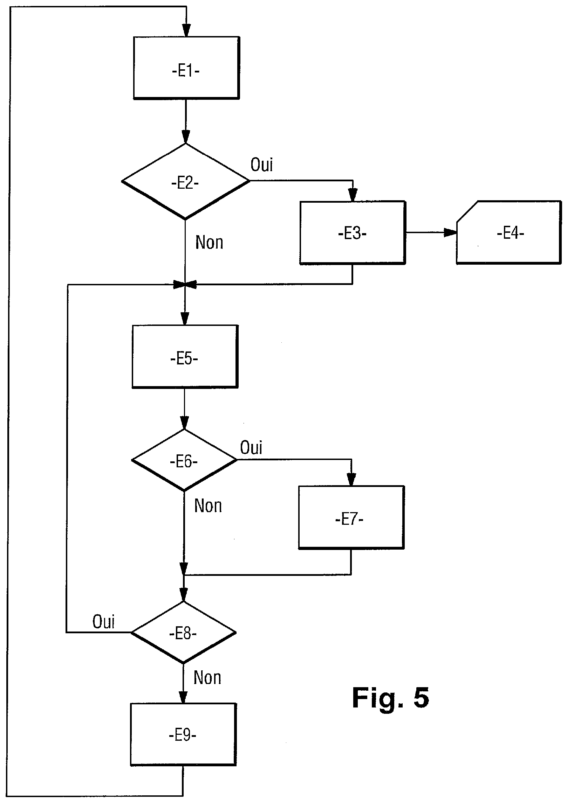

On décrit maintenant, en référence à la figure 5, un procédé de surveillance de la bouteille de gaz, qui utilise le détendeur selon l'invention 1.

Le procédé de surveillance consiste tout d'abord à détecter une montée de pression dans la chambre inférieure 7b de la chambre de pression 7 (étape E1). La montée de pression se produit lorsque le détendeur 1 est raccordé à une bouteille de gaz (non complètement vide) par un utilisateur ou par un opérateur, et que le gaz provenant de la bouteille de gaz remplit la chambre inférieure 7b.

La montée de pression est détectée par le microcontrôleur 32 et par le capteur de pression absolue 39.

Lorsque la monté de pression a été détectée, il convient de définir s'il faut ou non remettre à zéro un comptage de la consommation du gaz fourni par la bouteille de gaz (étape E2).

Il peut être décidé de remettre à zéro le comptage en interrogeant l'utilisateur ou l'opérateur via l'écran 55 du boîtier électronique 50. L'utilisateur ou l'opérateur renseigne alors son choix grâce aux boutons poussoirs 56.

L'utilisateur ou l'opérateur peut aussi être interrogé via l'interface RFID 45, l'interface BLE 46 ou l'interface LoRa 47. Le fournisseur de la bouteille de gaz peut aussi être interrogé via l'interface LoRa 47.

La décision peut aussi être prise automatiquement en utilisant une information relative à une déconnexion de la bouteille de gaz précédant l'étape E1. Cette information relative à la déconnexion peut provenir du capteur de pression absolue 39 ou bien d'un dispositif mécanique quelconque. Il peut être décidé de remettre à zéro le comptage à partir d'informations acquises suite à un appairage entre le détendeur 1 et la bouteille de gaz (le détendeur 1 pouvant être connecté successivement à différentes bouteilles de gaz).

Si le comptage est remis à zéro, on détermine si la bouteille de gaz est ou non une bouteille neuve (étape E3). A nouveau, l'utilisateur, l'opérateur ou le fournisseur peuvent être interrogés, ou bien la détermination peut se faire automatiquement.

Si la bouteille est bien une bouteille neuve, il est alors possible de renseigner diverses informations, parmi lesquelles le type de bouteille de gaz et le type de gaz (étape E4).

Puis, le détendeur 1 compte le débit du gaz, c'est-à-dire qu'il estime le débit total fourni par la bouteille de gaz à l'installation depuis que la bouteille de gaz a été raccordée à l'installation. A partir du débit total, un niveau de gaz restant dans la bouteille de gaz est décompté (étape E5).

Le niveau de gaz restant est alors comparé avec un niveau minimum prédéterminé (étape E6). Si le niveau de gaz restant atteint le niveau minimum prédéterminé, un message d'alerte est envoyé à l'utilisateur, à l'opérateur ou au fournisseur de la bouteille de gaz (étape E7).

Le fournisseur, notamment, peut alors décider de la stratégie à suivre quant au remplacement de la bouteille de gaz. Il peut par exemple décider de la remplacer immédiatement, ou bien de planifier un remplacement en fonction des niveaux de gaz restants d'autres bouteilles de gaz, ou bien simplement prévenir l'utilisateur que sa bouteille de gaz est presque vide.

Suite à l'étape E6, on évalue si la pression absolue de la chambre inférieure 7b est nulle ou non (étape E8). Cette évaluation peut être faite grâce à la fourche optique 8 ou bien grâce au capteur de pression absolue 39.

Si la pression absolue de la chambre inférieure 7b est non nulle, le procédé de surveillance reprend juste avant l'étape E5.

Si la pression absolue de la chambre inférieure 7b est nulle, le procédé de surveillance comporte une étape d'attente (étape E9). L'étape d'attente consiste à attendre que la pression absolue de la chambre inférieure 7b redevienne non nulle, c'est-à-dire qu'une montée de pression soit détectée (étape E1).

On note ici que la plupart des étapes du procédé de surveillance, et notamment les étapes E2, E3, E4, E6 et E7 peuvent être réalisées dans le détendeur 1, mais aussi par un serveur du fournisseur ou bien par un *smartphone* ou tout autre appareil en possession de l'utilisateur, de l'opérateur ou du fournisseur.

Le débit du gaz est mesuré par le détendeur 1. Par contre, le détendeur 1 peut parfaitement transmettre à l'utilisateur, à l'opérateur ou au fournisseur tout type de données relatives aux mesures de débit du gaz : les mesures « brutes » de débit du gaz, les mesures de débit du gaz compensées et traitées, le niveau de gaz restant, la masse de gaz consommée, etc.

Bien entendu, l'invention n'est pas limitée au mode de réalisation décrit mais englobe toute variante entrant dans le champ de l'invention telle que définie par les revendications.

Le débitmètre électronique n'est pas nécessairement un débitmètre à ultrasons, mais pourrait être par exemple un débitmètre thermique, un débitmètre à palette, à turbine, etc.

L'énergie permettant d'alimenter les composants électriques du détendeur ne proviennent pas nécessairement d'une batterie stockée dans le boîtier électronique. La batterie pourrait être stockée autre part. L'énergie pourrait aussi provenir d'un générateur d'énergie, qui comprendrait par exemple une turbine entraînée par le gaz.

L'architecture électrique pourrait aussi être différente, tout comme les composants utilisés, les traitements réalisés, les informations échangées.

## Revendications

1. Détendeur pour bouteille de gaz comportant un corps (2) à l'intérieur duquel sont définis un conduit d'entrée de gaz (5) destiné à être raccordé à la bouteille de gaz, une chambre de pression (7) dans laquelle débouche le conduit d'entrée de gaz (5), des moyens d'ajustement (9, 11, 12) d'une pression à l'intérieur de la chambre de pression (7), et un conduit de sortie de gaz (6) qui s'étend depuis la chambre de pression (7), où le corps (2) du détendeur (1) comporte un débitmètre électronique (23, 24) agencé pour mesurer un débit du gaz circulant dans le conduit de sortie de gaz (6), des composants électriques de mesure (30) agencés pour acquérir et stocker des mesures de débit du gaz, et des composants électriques de communication sans fil (42) agencés pour transmettre des données relatives aux mesures de débit du gaz, **caractérisé en ce que** le corps (2) comporte une chambre de mesure (33) dans laquelle sont positionnés le débitmètre électronique, les composants électriques de mesure (30) et les composants électriques de communication sans fil (42).

2. Détendeur selon la revendication 1, dans lequel le débitmètre électronique est un débitmètre à ultrasons comprenant un premier transducteur ultrasonore (23) et un deuxième transducteur ultrasonore (24) qui sont chacun agencés pour émettre et pour recevoir un signal ultrasonore de mesure parcourant un trajet (25) de longueur prédéfinie dans le conduit de sortie de gaz (6).

3. Détendeur selon la revendication 1, dans lequel le corps (2) comporte en outre un capteur de pression absolue (39) relié aux composants électriques de mesure (30) et agencé pour mesurer une pression absolue régnant à l'intérieur de la chambre de pression (7).

4. Détendeur selon la revendication 1, dans lequel la chambre de pression (7), le conduit de sortie de gaz (6) et la chambre de mesure (33) présentent une cloison commune (34) à l'intérieur du corps (2).

5. Détendeur selon les revendications 3 et 4, dans lequel la cloison commune (34) comporte un conduit de mesure (41) qui débouche dans la chambre de mesure (33) au regard du capteur de pression absolue (39).

6. Détendeur selon la revendication 1, comprenant en outre un boîtier électronique (50) comprenant un composant d'interface (55, 56) agencé pour acquérir ou transmettre des informations.

7. Détendeur selon la revendication 6, dans lequel le boîtier électronique (50) comporte un compartiment dans lequel est positionné un composant de stockage d'énergie électrique destiné à alimenter le boîtier électronique (50), les composants électriques de mesure (30) et les composants électriques de communication sans fil (42).

8. Détendeur selon la revendication 7, dans lequel le boîtier électronique comporte un capot (51) qui constitue une cloison de la chambre de mesure (33).

9. Détendeur selon la revendication 1, dans lequel le corps (2) comporte en outre un détecteur de pression absolue nulle à l'intérieur de la chambre de pression (7).

10. Détendeur selon la revendication 9, dans lequel les moyens d'ajustement comprennent un organe d'admission (12) qui comprend un clapet d'admission (18) agencé pour ouvrir ou fermer le conduit d'entrée de gaz (5), et dans lequel le détecteur de pression absolue nulle est un capteur optique (8) qui coopère avec l'organe d'admission (12).

11. Procédé de surveillance d'une bouteille de gaz sur laquelle est raccordé un détendeur (1) selon l'une des revendications précédentes, le procédé de surveillance comportant les étapes :
- de détecter une montée de pression dans la chambre de pression (7) du détendeur (1) ;
- de compter le débit du gaz fourni par la bouteille de gaz ;
- de décompter un niveau de gaz restant dans la bouteille de gaz ;
- de comparer le niveau de gaz restant avec un niveau minimum prédéterminé ;
- si le niveau de gaz restant atteint le niveau minimum prédéterminé, d'envoyer un message d'alerte ;
- sinon, de continuer à compter le débit du gaz.

12. Procédé de surveillance selon la revendication 11, comportant en outre l'étape, suite à la détection de montée de pression, de décider s'il convient ou non d'initialiser le comptage à zéro.

13. Procédé de surveillance selon la revendication 12, dans lequel la décision est prise en utilisant une information relative à un raccordement ou à une déconnexion de la bouteille de gaz, et/ou une information reçue lors d'un appairage du détendeur (1) et de la bouteille de gaz, et/ou une information reçue via les composants électriques de communication sans fil (42) .

14. Procédé de surveillance selon la revendication 11, comportant en outre les étapes, après avoir comparé le niveau de gaz restant avec le niveau minimum prédéterminé, de détecter si la pression absolue dans la chambre de pression est nulle, de continuer à compter le débit du gaz seulement si la pression absolue dans la chambre de pression est non nulle, et, si la pression du gaz fourni par la bouteille est nulle, d'attendre que celle-ci devienne non nulle.

15. Procédé de surveillance selon la revendication 11, dans lequel le décomptage du niveau de gaz restant dépend aussi de la pression absolue dans la chambre de pression et de la température du gaz.

16. Programme d'ordinateur comprenant des instructions pour mettre en œuvre, par un composant de traitement tel qu'un microcontrôleur pouvant être intégré dans un détendeur, le procédé de surveillance selon l'une des revendications 11 à 15.

17. Moyens de stockage qui stockent un programme d'ordinateur comprenant des instructions pour mettre en œuvre, par un composant de traitement tel qu'un microcontrôleur pouvant être intégré dans un détendeur, le procédé de surveillance selon l'une des revendications 11 à 15.

## Patentansprüche

1. Druckminderer für eine Gasflasche, umfassend ein Gehäuse (2), in dessen Innerem eine Gaseinlassleitung (5), die dazu bestimmt ist, an die Gasflasche angeschlossen zu werden, eine Druckkammer (7), in die die Gaseinlassleitung (5) mündet, Einstellmittel (9, 11, 12) zum Einstellen eines Druckes im Inneren der Gaskammer (7) und eine Gasauslassleitung (6), die sich von der Druckkammer (7) aus erstreckt, definiert sind, wobei das Gehäuse (2) des Druckminderers (1) einen elektronischen Durchflussmesser (23, 24) umfasst, der ausgebildet ist, um eine Durchflussmenge des Gases zu messen, das in der Gasauslassleitung (6) fließt, elektrische Messkomponenten (30), die ausgebildet sind, um Durchflussmessungen des Gases zu erfassen und zu speichern, sowie drahtlose elektrische Kommunikationskomponenten (42), die ausgebildet sind, um Daten bezüglich der Durchflussmessungen des Gases zu übertragen, **dadurch gekennzeichnet, dass** das Gehäuse eine Messkammer (33) umfasst, in der der elektronische Durchflussmesser, die elektrischen Messkomponenten (30) und die drahtlosen elektrischen Kommunikationskomponenten (42) positioniert sind.

2. Druckminderer nach Anspruch 1, bei dem der elektronische Durchflussmesser ein Ultraschall-Durchflussmesser ist, der einen ersten Ultraschallwandler (23) und einen zweiten Ultraschallwandler (24) umfasst, die jeweils ausgebildet sind, um ein Ultraschall-Messsignal, das eine Strecke (25) vordefinierter Länge in der Gasauslassleitung (6) durchläuft, zu senden und zu empfangen.

3. Druckminderer nach Anspruch 1, bei dem das Gehäuse (2) ferner einen Absolutdrucksensor (39) umfasst, der mit den elektrischen Messkomponenten (30) verbunden und ausgebildet ist, um einen Absolutdruck zu messen, der im Inneren der Druckkammer (7) herrscht.

4. Druckminderer nach Anspruch 1, bei dem die Druckkammer (7), die Gasauslassleitung (6) und die Messkammer (33) eine gemeinsame Trennwand (34) im Inneren des Gehäuses (2) aufweisen.

5. Druckminderer nach den Ansprüchen 3 und 4, bei dem die gemeinsame Trennwand (34) eine Messleitung (41) umfasst, die in die Messkammer (33) gegenüber dem Absolutdrucksensor (39) mündet.

6. Druckminderer nach Anspruch 1, ferner umfassend eine Elektronikbox (50), die eine Schnittstellenkomponente (55, 56) umfasst, die ausgebildet ist, um Informationen zu erfassen oder zu übertragen.

7. Druckminderer nach Anspruch 6, bei dem die Elektronikbox (50) ein Fach umfasst, in dem eine Speicherkomponente zum Speichern elektrischer Energie positioniert ist, die dazu bestimmt ist, die Elektronikbox (50), die elektrischen Messkomponenten (30) und die drahtlosen elektrischen Kommunikationskomponenten (42) zu speisen.

8. Druckminderer nach Anspruch 7, bei dem die Elektronikbox eine Abdeckung (51) umfasst, die eine Trennwand der Messkammer (33) bildet.

9. Druckminderer nach Anspruch 1, bei dem das Gehäuse (2) ferner einen Null-Absolutdruckdetektor im Inneren der Druckkammer (7) umfasst.

10. Druckminderer nach Anspruch 9, bei dem die Einstellmittel ein Einlassorgan (12) umfassen, das ein Einlassventil (18) enthält, das ausgebildet ist, um die Gaseinlassleitung (5) zu öffnen oder zu schließen, und bei dem der Null-Absolutdruckdetektor ein optischer Sensor (8) ist, der mit dem Einlassorgan (12) zusammenwirkt.

11. Überwachungsverfahren zum Überwachen einer Gasflasche, an die ein Druckminderer (1) nach einem der vorhergehenden Ansprüche angeschlossen ist, wobei das Überwachungsverfahren die Schritte umfasst:
- Erfassen eines Druckanstiegs in der Druckkammer (7) des Druckminderers (1);
- Zählen der Durchflussmenge des Gases, die von der Gasflasche geliefert wird;
- Abziehen eines Gasfüllstandes, der in der Gasflasche verbleibt;
- Vergleichen des verbleibenden Gasfüllstandes mit einem vorbestimmten Mindestfüllstand;
- wenn der verbleibende Gasfüllstand den vorbestimmten Mindestfüllstand erreicht, Senden einer Warnmeldung;
- andernfalls Fortsetzen des Zählens der Durchflussmenge des Gases.

12. Überwachungsverfahren nach Anspruch 11, ferner umfassend im Anschluss an die Erfassung des Druckanstiegs den Schritt des Entscheidens, ob es zweckmäßig wäre oder nicht, die Zählung auf Null zu initialisieren.

13. Überwachungsverfahren nach Anspruch 12, bei dem die Entscheidung getroffen wird, indem eine Information bezüglich eines Anschlusses oder eines Trennens der Gasflasche und/oder eine Information, die während einer Paarung des Druckminderes (1) und der Gasflasche empfangen wird, und/oder eine Information verwendet wird, die über die drahtlosen elektrischen Kommunikationskomponenten (42) empfangen wird.

14. Überwachungsverfahren nach Anspruch 11, ferner umfassend, nachdem der verbleibende Gasfüllstand mit dem vorbestimmten Mindestfüllstand verglichen wurde, die Schritte des Erfassens, ob der Absolutdruck in der Druckkammer Null ist, des Fortsetzens des Zählens der Durchflussmenge des Gases nur dann, wenn der Absolutdruck in der Druckkammer nicht Null ist und, wenn der Druck des Gases, das aus der Flasche geliefert wird, Null ist, des Wartens bis dieser ungleich Null wird.

15. Überwachungsverfahren nach Anspruch 11, bei dem das Abziehen des verbleibenden Gasfüllstands auch von dem Absolutdruck in der Drucckammer und der Temperatur des Gases abhängt.

16. Computerprogramm, umfassend Anweisungen zum Durchführen des Überwachungsverfahrens nach einem der Ansprüche 11 bis 15 mittels einer Verarbeitungskomponente, wie z. B. eines Mikrocontrollers, die in einen Druckminderer integriert werden kann.

17. Speichermittel, die ein Computerprogramm speichern, das Anweisungen zum Durchführen des Überwachungsverfahrens nach einem der Ansprüche 11 bis 15 mittels einer Verarbeitungskomponente, wie z. B. eines Mikrocontrollers, die in einen Druckminderer integriert werden kann, umfasst.

## Claims

1. Expansion valve for a gas cylinder having a body (2) inside which there are defined a gas inlet duct (5) intended to be connected to the gas cylinder, a pressure chamber (7) into which the gas inlet duct (5) opens, means (9, 11, 12) for adjusting a pressure inside the pressure chamber (7), and a gas outlet duct (6) that extends from the pressure chamber (7), **characterized in that** the body (2) of the expansion valve (1) has an electronic flowmeter (23, 24) designed to measure a flow rate of the gas flowing in the gas outlet duct (6), electrical measurement components (30) designed to acquire and store flow rate measurements of the gas, and wireless electrical communication components (42) designed to transmit data relating to the flow rate measurements of the gas, the body (2) having a measurement chamber (33) in which the electronic flowmeter, the electronic measurement components (30) and the wireless electrical communication components (42) are positioned.

2. Expansion valve according to Claim 1, wherein the electronic flowmeter is an ultrasound flowmeter comprising a first ultrasound transducer (23) and a second ultrasound transducer (24) that are each designed to transmit and to receive an ultrasound measurement signal travelling a journey (25) of predefined length in the gas outlet duct (6).

3. Expansion valve according to Claim 1, wherein the body (2) furthermore has an absolute pressure sensor (39) connected to the electrical measurement components (30) and designed to measure an absolute pressure prevailing inside the pressure chamber (7).

4. Expansion valve according to Claim 1, wherein the pressure chamber (7), the gas outlet duct (6) and the measurement chamber (33) have a common partition (34) inside the body (2).

5. Expansion valve according to Claims 3 and 4, wherein the common partition (34) has a measurement duct (41) that opens out into the measurement chamber (33) facing the absolute pressure sensor (39).

6. Expansion valve according to Claim 1, furthermore comprising an electronic module (50) comprising an interface component (55, 56) designed to acquire or transmit information.

7. Expansion valve according to Claim 6, wherein the electronic module (50) has a compartment in which there is positioned an electrical energy storage component intended to supply power to the electronic module (50), the electrical measurement components (30) and the wireless electrical communication components (42).

8. Expansion valve according to Claim 7, wherein the electronic module has a hood (51) that forms a partition of the measurement chamber (33).

9. Expansion valve according to Claim 1, wherein the body (2) furthermore has a zero absolute pressure detector inside the pressure chamber (7).

10. Expansion valve according to Claim 9, wherein the adjustment means comprise an intake element (12) that comprises an intake valve (18) designed to open or close the gas inlet duct (5), and wherein the zero absolute pressure detector is an optical sensor (8) that interacts with the intake element (12) .

11. Method for monitoring a gas cylinder to which an expansion valve (1) according to one of the preceding claims is connected, the monitoring method comprising the steps:
- of detecting a pressure rise in the pressure chamber (7) of the expansion valve (1);
- of counting the flow rate of the gas supplied by the gas cylinder;
- of counting down a remaining gas level in the gas cylinder;
- of comparing the remaining gas level with a predetermined minimum level;
- if the remaining gas level reaches the predetermined minimum level, of sending an alert message;
- if not, of continuing to count the flow rate of the gas.

12. Monitoring method according to Claim 11, furthermore comprising the step, following the detection of a pressure rise, of deciding whether or not to set the count to zero.

13. Monitoring method according to Claim 12, wherein the decision is made using information relating to a connection or to a disconnection of the gas cylinder, and/or information received during pairing of the expansion valve (1) and the gas cylinder, and/or information received via the wireless electrical communication components (42).

14. Monitoring method according to Claim 11, furthermore comprising the steps, after having compared the remaining gas level with the predetermined minimum level, of detecting whether the absolute pressure in the pressure chamber is zero, of continuing to count the flow rate of the gas only if the absolute pressure in the pressure chamber is other than zero and, if the pressure of the gas supplied by the gas cylinder is zero, waiting for this to become other than zero.

15. Monitoring method according to Claim 11, wherein the countdown of the remaining gas level also depends on the absolute pressure in the pressure chamber and on the temperature of the gas.

16. Computer program comprising instructions for a processing component such as a microcontroller able to be integrated into an expansion valve to implement the monitoring method according to one of Claims 11 to 15.

17. Storage means that store a computer program comprising instructions for a processing component such as a microcontroller able to be integrated into an expansion valve to implement the monitoring method according to one of Claims 11 to 15.
